# EUROPÄISCHE PATENTANMELDUNG

(11) **EP 0 610 714 A2**
(43) Veröffentlichungstag der Anmeldung: **17.08.1994**
(21) Anmeldenummer: 94101042.3
(22) Anmeldetag: 25.01.1994
(51) Int. Cl.: C08G 18/40

(54) **Harte hydrophobe Polyurethane**

(30) Priorität: 08.02.1993 DE 4303556
(71) Anmelder: BAYER AG, 51368 Leverkusen (DE)
(72) Erfinder: Müller, Hanns-Peter, Dr., D-51519 Odenthal (DE); Kapps, Manfred, Dr., D-51467 Bergisch Gladbach (DE); Sirinyan, Kirkor, Dr., D-51467 Bergisch Gladbach (DE); Scholl, Thomas, Dr., D-51469 Bergisch Gladbach (DE); Weider, Richard, Dr., D-51381 Leverkusen (DE); Dhein, Rolf, Dr., D-47800 Krefeld (DE)

(57) **Zusammenfassung**

Harte Polyurethane sind erhältlich durch Umsetzung von
1. Polyisocyanaten mit
2. einem Polyolgemisch, bestehend aus
   a) - OH-funktionellen Polyestern vom Molekulargewicht 260 - 2000 auf Basis von C₉-C₂₂-Fettsäuren
   b) - OH-funktionellen, oligomeren Polyolefinen vom Molekulargewicht 700 - 6000 und gegebenenfalls
   c) - mindestens difunktionellen Polyolen vom Molekulargewicht 62 - 8000, vorzugsweise vom Molekulargewicht 62 - 400, die von den Komponenten 2a) und 2b) unterschiedlich sind,
   gegebenenfalls in Gegenwart von
3. Wasser als Treibmittel und
4. in der PUR-Chemie an sich bekannten Hilfs- und Zusatzmitteln.

## Beschreibung

Die Erfindung betrifft neue hydrophobe, harte Polyurethane, insbesondere Polyurethan-(PUR)-Hartschaumstoffe.

Werkstoffe auf Basis von Polyurethanen sind seit langem bekannt (s. beispielsweise G. Oertel, "Polyurethane", Kunststoff-Handbuch, Georg Thieme Verlag Stuttgart - New York (1987)). In diesem Zusammenhang sei beispielsweise auf PUR-Gießharze, PUR-Weich- und Hartschaumstoffe hingewiesen. PUR-Schaumstoffe sind vernetzte Polyurethane. Hartschaumstoffe sind meistens geschlossenzellige und Weichschaumstoffe vornehmlich offenzellige Werkstoffe. Hartschaumstoffe werden in der Regel durch den Zusatz eines flüssigen, niedrigsiedenden Treibmittels, bisher insbesondere des Fluor-trichlor-methans, auf physikalischem Wege hergestellt (vgl. hierzu G. Oertel, "Polyurethane", Kunststoff-Handbuch, Georg Thieme Verlag Stuttgart - New York (1987)). Fluor-Chlor-Kohlenwasserstoffe werden jedoch als umweltbelastend angesehen. Aus diesem Grund wird versucht, diese Verbindungsklasse durch niedrigsiedende Kohlenwasserstoffe wie n-Pentan oder n-Hexan zu ersetzen (vgl. hierzug G. Heilig, Kunststoffe, 81, S. 622 (1991)). Bekannterweise sind niedrigsiedende Kohlenwasserstoffe leicht brennbare Flüssigkeiten. Das Arbeiten mit niedrigsiedenden Kohlenwasserstoffen erfordert daher oft zusätzliche, kostspielige Explosionsschutzmaßnahmen.

PUR-Matrices sind in gewissen Grenzen hydrophile Systeme. Nach Literaturangaben gehen -NH-CO-O- und -NH-CO-NH-Bindungen mit den Wassermolekülen eine relativ starke, physikalische Wechselwirkung ein und ermöglichen dadurch eine Wasser-Diffusion im Innern der PUR-Matrix (vgl. beispielsweise V. Gajewski, Proceeding of the SPI-33rd Annual Technical/Marketing Conference, S. 506, Technomic Publishing Co., Inc. Pennsylvania (1990)).

Die (in der Regel unerwünschte) Wasser-Diffusion in der PUR-Matrix kann
o zu einer Reduzierung der Hydrolysebeständigkeit,
o zu einer Reduzierung der thermischen und elektrischen Isolationseigenschaften,
o zur Verschlechterung der mechanischen Eigenschaften, insbesondere der Dimensionsstabilität bzw. des Schrumpfverhaltens, und
o zu einer Erhöhung der Gasdurchlässigkeit, z.B. von CO₂ und O₂, führen.

Der Erfindung lag die Aufgabe zugrunde, besonders hydrophobe harte Polyurethane und insbesondere PUR-Hartschaumstoffe zu entwickeln, die sich durch Schrumpffreiheit, Dimensionsstabilität, Hydrolysestabilität, hervorragendes Langzeitverhalten und sehr gute Isolationseigenschaften auszeichnen. Die PUR-Hartschaumstoffe sollten durch Zusatz von Wasser als Treibmittel erhalten werden, geschlossenzellig sein und die bereits erwähnten vorteilhaften Eigenschaften aufweisen.

Diese Aufgabe wird überraschenderweise dadurch gelöst, indem man Polyisocyanate mit einer speziellen Polyolmischung bestehend aus
a) speziellen OH-funktionellen Polyestern,
b) speziellen OH-funktionellen, oligomeren Polyolefinen und gegebenenfalls
c) speziellen Polyolen
zu Polyurethanen umsetzt.

Es war äußerst überraschend, daß durch Einsatz der erfindungsgemäßen Polyolabmischungen stark hydrophobe Polyurethane erhalten werden, obwohl ihre Matrices weiterhin durch Bildung von polaren -NH-CO-O- und -NH-CO-NH- Verknüpfungen charakterisiert sind.

Gegenstand der Erfindung sind harte Polyurethane, erhältlich durch Umsetzung von
1. Polyisocyanaten mit
2. einem Polyolgemisch, bestehend aus
   a) - OH-funktionellen Polyestern vom Molekulargewicht 260-2000 auf Basis von C₉-C₂₂-Fettsäuren
   b) - OH-funktionellen, oligomeren Polyolefinen vom Molekulargewicht 700-6000 und gegebenenfalls
   c) - mindestens difunktionellen Polyolen vom Molekulargewicht 62-8000, vorzugsweise vom Molekulargewicht 62-400, die von den Komponenten 2a) und 2b) unterschiedlich sind,
   gegebenenfalls in Gegenwart von
3. Wasser als Treibmittel und
4. in der PUR-Chemie an sich bekannten Hilfs- und Zusatzmitteln.

Erfindungsgemäß bevorzugt ist, daß
- die Komponente 2b) ein Polyisobuten ist,
- die Komponente 2b) ein Polybutadien ist,
- die Komponente 2b) ein Polyisopren ist,
- man als Komponente 2a) OH-funktionelle Triglyceride der natürlichen Fettsäuren oder Sorbitanester verwendet,
- die Komponente 2a) in einer Menge von 1-80 Gew.-% im Polyolgemisch 2) enthalten ist,
- die Komponente 2b) in einer Menge von 5-80 Gew.-% im Polyolgemisch 2) enthalten ist und
- die Komponente 2c) in einer Menge von 0-80 Gew.-% im Polyolgemisch 2) enthalten ist, wobei die Summe der Komponenten 2a), 2b) und 2c) 100 Gew.-% beträgt.

Erfindungsgemäß bevorzugt sind harte, hydrophobe Polyurethanschaumstoffe.

Die Erfindung betrifft auch die Verwendung der harten, hydrophoben Polyurethanschaumstoffe als Isolationsmaterialien in der Kältetechnik, im Bau-, Automobil-, Schiffbau- und/oder Elektronikbereich.
1. Ausgangsmaterialien für die harten, hydrophoben Polyurethane sind:
   Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   n = 2-4, vorzugsweise 2 und 3,
   und
   Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
2. Ein spezielles Polyolgemisch, bestehend aus
   a) OH-funktionellen Polyestern vom Molekulargewicht 260-2000 auf Basis von C₉-C₂₂-Fettsäuren
      Die OH-funktionellen Polyester sind an sich bekannte Verbindungen, wobei vorzugsweise solche auf Basis von nachwachsenden Rohstoffen in Betracht kommen. Die Definition "nachwachsender Rohstoffe" kann beispielsweise der Literatur "Nachwachsende Rohstoffe und ihre Verwendung", AIO (Auswertungs- und Informationsdienst für Ernährung, Landwirtschaft und Forsten (AIO) 5300 Bonn (1992)) entnommen werden. In diesem Zusammenhang sei beispielsweise auf Sorbitanester der aliphatischen langkettigen, organischen Säuren und Polyester aus ein- oder mehrwertigen Alkoholen und Dodecan-, Laurin-, Hexadekan- und Palmitinsäure sowie auf Polyester von ein- oder mehrfach ungesättigten Fettsäuren der Kettenlänge C₉-C₂₂-hingewiesen.
      Bevorzugt sind Polyester auf Basis von OH-funktionellen Triglyceriden der natürlichen Fettsäuren und Sorbitanester.
      Es ist bekannt, daß Triglyceride der ungesättigten Fettsäuren nach dem in situ-Perameisensäure-Verfahren epoxidiert und durch die anschließende Umsetzung mit Alkoholen oder Säuren mit OH-Gruppen versehen werden können (vgl. hierzu B. Gruber et al. Fett Wissenschaft Technologie, 89, 147 (1987) und R. Höfe, Phänomen Farbe, 4, S. 55 (1992)).
      Erfindungsgemäß werden vorzugsweise OH-funktionelle Triglyceride der 9-Hexadecensäure (Palmitinsäure), 9-Octadecensäure (Ölsäure), 9,12-Octadecadiensäure (Linolsäure), 9,12,15-Octadecatriensäure (Linolensäure), 9,11,13-Octadecatriensäure (Holzöl) und ferner 12-Hydroxy-9-octadecensäure (Ricinolsäure) bzw. deren Mischungen untereinander verwendet.
      Ihre Menge beträgt im Polyolgemisch in der Regel 1 - 80 Gew.-%.
      Die OH-Zahl (s. hierzu Hydroxylzahl, H. Kittel, Farben- Lack- und Kunststoff-Lexikon, Wiss. Verlagsgesellschaft M.B.H. Stuttgart (1952)) der genannten Polyester liegt in der Regel im Bereich von 50 bis 600.
      Selbstverständlich können auch Abmischungen der genannten Polyole verwendet werden.
   b) OH-funktionelle, oligomere Polyolefine vom Molekulargewicht 700-6000.
      Es handelt sich hierbei ebenfalls um an sich bekannte Verbindungen. Ihre Herstellung kann sowohl durch gezielte Polymerisation und anschließenden Kettenabbruch als auch durch ein selektives nachträgliches Abbauen der Polymermoleküle erfolgen (vgl. beispielsweise DE-O 2.147.874, CA 792.805, CA 931.299, G.A. Verdol et al., Rubber Agc 98, S. 57 (1966) und Firmenschrift BF Goodrich AB-211 "Routes to Polyurethane Modification with Hycar Hydroxyl-Terminated Reactiv Liqued Polymers", BF Goodrich, 9911 Cleveland).
      Ihre OH-Zahl liegt in der Regel zwischen 20 bis 300, vorzugsweise zwischen 20 bis 120. Ihre Menge (bezogen auf das Polyolgemisch) liegt in der Regel zwischen 5 bis 50 Gew.-%.
      Hierzu können grundsätzlich alle OH-funktionellen Polyolefine beispielsweise auf Basis Butadien, Isopren, Isobuten eingesetzt werden, wobei solche auf Basis von Butadien und Isopren besonders bzw. solche auf Basis von Isobuten ganz besonders bevorzugt sind.
      Selbstverständlich können die OH-Gruppen in besonderen Fällen durch andere reaktive Gruppen wie Amino- oder Säure-Gruppen ersetzt werden. In diesem Zusammenhang sei auf teilweise oder völlig aminterminierte, oligomere Polyisobutene hingewiesen.
   c) Die mindestens difunktionellen Polyole vom Molekulargewicht 62-8000 sind unterschiedlich von den Komponenten 2a) und 2b) und sind vorzugsweise Polyetherpolyole oder niedermolekulare Polyole vom Molekulargewicht 62-400 wie Glycerin oder Butandiol; ferner höherfunktionelle Alkylenoxidaddukte, vor allem solche mit Startern auf Naturstoffbasis wie Sorbit, Saccharose, Glucose und Glycerin (vgl. beispielsweise DE-OS 2.639.083, US 2.990.376, DE-O 2.639.083, 2.639.084, 2.714.084, 2.714.104, 2.721.186, 2,721.093, 2.732.077, 2.738.154, 2.738.512, 2.756.270, 2.808.228 und 2.831.659).
      Als Epoxide für den Aufbau von Polyetherpolyolen kommen in erster Linie Propylenoxid und/oder Ethylenoxid in Betracht. Da Propylenoxid bei der alkalisch katalysierten Polyaddition sekundäre OH-Gruppen, Ethylenoxid dagegen primäre OH-Gruppen liefert und letztere reaktiver gegenüber Isocyanatgruppen sind, kann über die Art des Epoxids das Aktivitätsverhalten des Polyethers vorbestimmt werden. Durch die stufenweise Polyaddition von Propylen- und Ethylenoxid lassen sich Segmente aus dem ein oder anderen Epoxid gezielt an definierten Stellen in die Ketten einbauen. Damit können die Eigenschaften des Polyols - neben der Aktivität auch Viskosität, Hydrophilie und Verträglichkeit mit den erwähnten OH-funktionellen Polyestern (Komponente 2a)) und oligomeren Polyolefinen (Komponente 2b)) - in gewünschter Weise gesteuert werden.
      Die Mengen der Polyole 2c) in der Polyolmischung beträgt in der Regel 0 bis 80 Gew.-% (bezogen auf die gesamte Polyolmischung).
      Die OH-Gruppen der genannten Polyole können auch gegebenenfalls durch Aminogruppen teilweise oder vollständig ersetzt sein. Es ist bekannt, daß man als Starter bei der Herstellung von Polyethern aliphatische Amine, wie z.B. Ethylendiamin, als auch aromatische Amine, z.B. Diaminotoluol oder Diaminodiphenylmethan einsetzt. Hierzu finden auch Aminoalkohole Verwendung. Derartige stickstoffhaltige Polyole werden aufgrund ihrer hohen Aktivität oft in Hartschaumrezepturen benutzt (vgl. hierzu G. Oertel, "Polyurethane", Kunststoff-Handbuch, S. 18, Georg Thieme Verlag Stuttgart - New York (1987)).
3. Als Treibmittel wird vorzugsweise Wasser eingesetzt.
4. Gegebenenfalls werden Hilfs- und Zusatzmittel mitverwendet wie
   a) leicht flüchtige organische Substanzen als zusätzliche Treibmittel,
   b) Katalysatoren der an sich bekannten Art in Mengen von bis zu 10 Gew.-%, bezogen auf die Mengen an Komponente 2,
   c) oberflächenaktive Zusatzstoffe, wie Emulgatoren und Schaumstabilisatoren,
   d) Reaktionsverzögerer, z.B sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Die harten PUR-Schaumstoffe werden in an sich bekannter Weise hergestellt.

Durchführung des Verfahrens zur Herstellung von Polyurethanen:
Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Die Schaumstoffe können z.B. durch Blockverschäumung oder nach dem an sich bekannten Doppeltransportbandverfahren hergestellt werden.

Unter hydrophoben PUR-Hartschaumstoffen sind solche zu verstehen, die nach ihrer Präparierung (vgl. hierzu Ausführungsbeispiele) eine Wasseraufnahme in 100 % Wassergesättigter Atmosphäre bei 30°C bis zum Erreichen der Sättigung (Massenkonstanz) < 3,5 %, vorzugsweise < 3,25 % und ganz besonders bevorzugt < 2,9 % aufweisen.

Ohne den Umfang der Erfindung einzuschränken sei darauf hingewiesen, daß die erfindungsgemäßen PUR-Hartschaumstoffe eine Rohdichte zwischen 25-85 m³/kg aufweisen sollen, wobei in besonderen Fällen diese Grenzen beliebig nach unten oder nach oben variiert werden können.

Die erfindungsgemäß verwendeten Polyolmischungen eignen sich hervorragend zur Herstellung von Wasser-getriebenen, schrumpffreien, geschlossenzelligen, relativ CO₂- und O₂-undurchlässigen PUR-Hartschaumstoffen.

Die so erhaltenen harten, hydrophoben, offenzelligen oder insbesondere geschlossenzelligen PUR-Schaumstoffe können im Tief- und Hochbau-, Automobil-, Verpackungs-, Haushalts-oder Schiffbau- und Elektrosektor bzw. in der Kühltechnik eingesetzt werden. Ferner sind sie hervorragend zur Herstellung von Dämmplatten, PUR-Integralschaumstoffen und Sandwichelementen geeignet. Sie können problemlos zur Innenraumverkleidung und Hohlraumausschäumung eingesetzt werden. Dabei ist grundsätzlich die Herstellung von hydrophoben Hart- und Halbhartschaumstoffen möglich. Eine Verarbeitung zu massiven Werkstoffen nach den bekannten Gießverfahren - gegebenenfalls unter Druck - ist ebenso möglich wie eine Verarbeitung in der bekannten RIM- und RRIM-Technologie. Eine nachträgliche Warmverformung ist ebenfalls mit den erfindungsgemäßen Polyurethanen möglich.

Die vorliegende Erfindung wird anhand der nachfolgenden Ausführungsbeispiele näher erläutert. Alle Prozentangaben bedeuten Gew.-%.

### Beispiele

### Beispiel 1

Ein PUR-Reaktionsgemisch bestehend aus
48,0 Gew.-Teilen OH-funktionalisiertem, oligomerem Polyisobuten mit der Molmasse von ca. 4000 g/mol und der OH-Zahl 28
48,0 Gew.-Teilen fettschemischem Polyol auf Basis Glycerin
und Sojaöl mit OH-Zahl 250
14,0 Gew.-Teilen Glycerin
6,0 Gew.-Teilen Wasser
3,6 Gew.-Teilen Desmorapid® DB, ein PUR-Aktivator (Bayer AG)
1,5 Gew.-Teilen Siliconstabilisator des Typs PU 1836 (Bayer AG) und
204,0 Gew.-Teilen Desmodur® 44 V 20, ein Roh-MDI (Bayer AG)
wird bei Raumtemperatur unter starkem Rühren vermischt. Anschließend wird das flüssige, noch nicht sichtbar schäumende Gemisch in einen Papierkasten mit den Maßen 25 x 13 x 13 cm eingebracht und unter Selbsterwärmung aufgeschäumt.

Die Steigzeit der PUR-Mischung beträgt ca. 60 Sek. Nach weiteren 120 Sek. erreicht der Schaumstoff eine ausreichende Festigkeit und ist problemlos handhabbar.

Der entstandene Hartschaumstoff weist eine Blockhöhe von ca. 21 cm auf und besitzt eine Rohdichte von 43 kg/m³. Er ist hydrophob, dimmensionsstabil und nach Lagerung von mehreren Wochen schrumpffrei. Seine Wasseraufnahme liegt bei ca. 2,6 %.

Zur Ermittlung der Wasseraufnahme wird die Probe geraspelt, bei Raumtemperatur unter 300 bar Druck zu einer kompakten Tablette gepreßt und 16 h über Blaugel getrocknet. Anschließend wird die Wasseraufnahme in 100 % Wasser-gesättigter Atmosphäre bei 30°C bis zum Erreichen der Massenkonstanz (ca. 6 h) mit Hilfe einer Mikroanalysenwaage gravimetrisch ermittelt.

### Vergleichsbeispiel 1a

Ein PUR-Reaktionsgemisch bestehend aus
48,0 Gew.-Teilen Polyisobuten nach Beispiel 1
48,0 Gew.-Teilen Desmophen® 4012, ein Polyol auf Basis Trimethylolpropan und Propylenoxid (Bayer AG), OH-Zahl 380
14,4 Gew.-Teilen Glycerin
6,0 Gew.-Teilen Wasser
3,6 Gew.-Teilen Desmorapid® DB und
1,5 Gew.-Teilen Siliconstabilisator gemäß Beispiel 1
wird nach Beispiel 1 verrührt. Man bekommt eine hochviskose Polyolmischung. Diese Mischung ist nicht mit der Polyisocyanatkomponente (Desmodur 44 V 20) mischbar bzw. läßt sich nicht zu einem PUR-Hartschaumstoff verarbeiten.

### Vergleichsbeispiel 1b

Ein PUR-Reaktionsgemisch nach Beispiel 1, bestehend aus
100,0 Gew.-Teilen Desmophen® 4012 R, ein Polyetherpolyol aus Trimethylolpropan und Propylenoxid (Bayer AG), OH-Zahl 380
6,0 Gew.-Teilen Wasser
3,6 Gew.-Teilen Desmorapid® DB
1,6 Gew.-Teilen Siliconstabilisator gemäß Beispiel 1 und
197,8 Gew.-Teilen Desmodur® 44 V 20
wird nach Beispiel 1 aufgeschäumt. Man erhält einen geschlossenzelligen PUR-Hartschaumstoff mit einer Steigzeit von 60 Sek. und einer Blockhöhe von ca. 21 cm. Er weist eine Rohdichte von 41 kg/m³ auf. Er ist relativ hydrophil und seine Wasseraufnahme liegt bei 4,2 %.

### Beispiel 2

Eine PUR-Mischung, bestehend aus
40,0 g OH-funktionellem, handelsüblichem, oligomerem Polybutadien mit der Molmasse von ca. 2500 g/mol und der OH-Zahl ^{∼}46
40,0 g fettchemischem Polyol nach Beispiel 1
11,7 g Glycerin
5,0 g Wasser
1,3 g Siliconstabilisator gemäß Beispiel 1
3,0 g Desmorapid® DB und
170 g Desmodur® 44 V 20
nach Beispiel 1 aufgeschäumt.

Man erhält einen schrumpffreien, hydrophoben PUR-Hartschaumstoff. Seine Rohdichte liegt bei ^{∼} 43,6 kg/m³ und seine Wasseraufnahme bei 2,8 %.

## Patentansprüche

1. Harte Polyurethane, erhältlich durch Umsetzung von
1. Polyisocyanaten mit
2. einem Polyolgemisch, bestehend aus
a) - OH-funktionellen Polyestern vom Molekulargewicht 260 - 2000 auf Basis von C₉-C₂₂-Fettsäuren
b) - OH-funktionellen, oligomeren Polyolefinen vom Molekulargewicht 700 - 6000 und gegebenenfalls
c) - mindestens difunktionellen Polyolen vom Molekulargewicht 62 - 8000, vorzugsweise vom Molekulargewicht 62 - 400, die von den Komponenten 2a) und 2b) unterschiedlich sind,
gegebenenfalls in Gegenwart von
3. Wasser als Treibmittel und
4. in der PUR-Chemie an sich bekannten Hilfs- und Zusatzmitteln.

2. Harte Polyurethane gemäß Anspruch 1, dadurch gekennzeichnet, daß die Komponente 2b) ein Polyisobuten ist.

3. Harte Polyurethane gemäß Anspruch 1, dadurch gekennzeichnet, daß die Komponente 2b) ein Polybutadien ist.

4. Harte Polyurethane gemäß Anspruch 1, dadurch gekennzeichnet, daß die Komponente 2b) ein Polyisopren ist.

5. Harte Polyurethane gemäß Anspruch 1, dadurch gekennzeichnet, daß man als Komponente 2a) OH-funktionelle Triglyceride der natürlichen Fettsäuren oder Sorbitanester verwendet.

6. Harte Polyurethane gemäß Ansprüchen 1-5, dadurch gekennzeichnet, daß die Komponente 2a) in einer Menge von 1 - 80 Gew.-% im Polyolgemisch 2) enthalten ist (wobei die Summe der Komponenten 2a), 2b) und 2c) 100 Gew.-% beträgt.

7. Harte, hydrophobe Polyurethane gemäß Ansprüchen 1 bis 5, dadurch gekennzeichnet, daß die Komponente 2b) in einer Menge von 5-80 Gew.-% im Polyolgemisch 2) vorliegt (wobei die Summe der Komponenten 2a), 2b) und 2c) 100 Gew.-% beträgt).

8. Harte Polyurethane gemäß Ansprüchen 1-5, dadurch gekennzeichnet, daß die Komponente 2c) in einer Menge von 0 - 80 Gew.-% im Polyolgemisch enthalten ist (wobei die Summe der Komponenten 2a), 2b) und 2c) 100 Gew.-% beträgt).

9. Harte, hydrophobe Polyurethanschaumstoffe gemäß Ansprüchen 1-8.

10. Verwendung der harten, hydrophoben Polyurethanschaumstoffe gemäß Anspruch 9 als Isolationsmaterialien in der Kältetechnik, im Bau-, Automobil-, Schiffbau- und/oder Elektronikbereich.
